# EUROPEAN PATENT SPECIFICATION

(11) **EP 4 293 335 B1**
(45) Date of publication and mention of the grant of the patent: **30.07.2025**
(21) Application number: 22178783.1
(22) Date of filing: 13.06.2022
(51) Int. Cl.: G01N 1/22, G01N 35/00

(54) **DETECTION OF MOIST MEDIA IN BIOANALYTICAL DEVICES**
DETEKTION VON FEUCHTEN MEDIEN IN BIOANALYTISCHEN VORRICHTUNGEN
DÉTECTION DE MILIEUX HUMIDES DANS DES DISPOSITIFS BIOANALYTIQUES

(43) Date of publication of application: 20.12.2023
(73) Proprietor: MBV AG, 8712 Staefa (CH)
(72) Inventor: ARMBRECHT, Lucas, 8712 Stäfa (CH)
(74) Representative: Schulz Junghans Patentanwälte PartGmbB

(56) References cited:
- EP-A1- 3 869 178
- WO-A2-03/004996
- WO-A2-03/081212
- US-A1- 2020 209 161

## Description

The present invention relates to a bioanalytical device as well as to a method using such a device.

Many bioanalytical devices use growth media e.g. in form of plates and/or liquids to collect, count, grow or monitor cells or bacterial spores. These devices could benefit from an automatic detection of the presence of growth media in order to trigger specific actions.

One example are microbial air samplers that extract the targeted particles from the air onto or into a suitable growth medium. The currently preferred method is to use a stream of gas/air that is directed to a growth medium. The accelerated particles impact on the nutrient plate for subsequent analysis. It is a potential risk that the operator forgets to insert the required medium (e.g. nutrient plate) prior to a measurement or that the operator forgets to replace the already inserted medium prior to the subsequent measurement.

US2020209161A1 discloses a mold sensor that is configured with an enclosed chamber in which a nutrient-treated substrate is positioned. The mold sensor includes a sensing system that is configured to measure a property of the substrate that corresponds to a pH value of the substrate. A controller operates the sensing system and is programmed to detect a presence of mold growing in the chamber by estimating the pH value from the measured property.

Currently, there is no available method to infer presence and status of said medium in a bioanalytical device such as a microbial air sampler.

For stationary tools such as automated microscopes, there exist optical, electrical and mechanical solutions to detect the presence of the shape and size of a growth medium plate, often in form of a round Petri dish.

In contrast, the presence and/or status of a growth medium in a bioanalytical device is not automatically assessed. Particularly, in applications such as microbial air sampling, a simple and integrated setup for such a purpose is not available to date. Hence, growth medium presence during sampling is mainly assured for by standardized working procedures. This means there is no possibility to infer whether a plate is in the currently operating system or not. Especially for long sampling durations, this is a severe limitation as opening the instrument for a manual examination is not possible without invalidating the ongoing measurement.

Therefore, based on the above, the problem to be solved by the present invention is to provide a bioanalytical device and a corresponding method that are improved with regard to the above-described difficulty of detecting a presence of a moist medium such as a growth medium in the bioanalytical device.

The problem is solved by a bioanalytical device having the features of claim 1, and a method having the features of claim 14.

Preferred embodiments of these aspects of the present invention are stated in the corresponding sub claims and are also described below.

According to claim 1, a bioanalytical device is disclosed, comprising:
- a housing comprising an internal space configured to accommodate a moist medium at a location in said internal space,
- a humidity sensor configured to measure a humidity in said internal space and to provide an output signal indicative of said humidity,
- an analyzing unit operatively connected to the humidity sensor so as to receive said output signal, wherein the analyzing unit is configured to derive from said output signal a change of said humidity over time for detecting a presence of the moist medium in the internal space of the housing, and
wherein the analyzing unit is configured to detect the presence of the moist medium in the internal space when the determined change in relative humidity over time forms a local maximum.

Thus, advantageously, the present invention provides a means to detect and monitor whether or not a moist medium, for instance a moist growth medium, is present in a bioanalytical device. The moist medium can be medium containing water. However, the moist medium can also be a liquid.

Particularly, the present invention is applicable to a wide range of applications such as microbial air sampling. The present invention is easy to implement, can be realized in miniature size and works without direct contact between said medium and the detecting humidity sensor simplifying its implementation.

According to a preferred embodiment of the bioanalytical device, the internal space of the housing forms a flow channel, wherein the housing is configured to accommodate the moist medium, preferably a carrier carrying the moist medium, in the internal space at said location so that the flow channel extends along the moist medium, particularly along the carrier carrying the moist medium.

Preferably, in an embodiment, the flow channel extends from an inlet of the housing to an outlet of the housing. The flow channel may also form a closed loop.

According to yet another embodiment of the bioanalytical device, the bioanalytical device is configured to provide a gas flow through the flow channel so that the gas flow passes the moist medium (e.g. carried by the carrier) when the moist medium is arranged in the internal space of the housing. Particularly, the gas can be ambient air, but may also be any other gas used e.g. in cell culture.

Particularly, in an embodiment, the bioanalytical device is configured to suck in the gas flow through the inlet and discharge the gas flow through said outlet.

According to a further embodiment, the humidity sensor is arranged in the flow channel downstream of said location, i.e. downstream of the moist medium (particularly downstream of the carrier carrying the moist medium in case the carrier is arranged in the internal space of the housing as intended at said location), so that the gas flow passes the moist medium first and thereafter the humidity sensor.

Furthermore, according to an embodiment of the present invention, the bioanalytical device further comprises a control unit configured to control the gas flow. Particularly, controlling the gas flow can mean or comprise to turn on or to turn off a flow generating device of the bioanalytical device such as a fan, or to open or close a valve of the bioanalytical device to allow a pressured gas to flow.

According to a preferred embodiment of the present invention, the analyzing unit is configured to determine the change of humidity over time at a start-up of the gas flow (e.g. through the flow channel).

As described above, the analyzing unit is configured to detect the presence of the moist medium (particularly carried by said carrier) in the internal space when the determined change in relative humidity over time forms a peak, particularly at said start-up of the gas flow.

Preferably, according to an embodiment of the present invention, the moist medium is a moist growth medium for promoting microbial growth. Particularly, the carrier is a plate, e.g. a petri dish.

Further, according to a preferred embodiment, the bioanalytical device is configured to pass the gas flow along the moist medium when the moist medium (or the carrier carrying the moist medium) is arranged in the internal space such that particulate matter contained in said air flow settles on the moist medium. Particularly, the particulate matter can be microbes, wherein here the moist medium is a moist growth medium for promoting growth of said microbes for detection of said microbes (e.g. via inspection of the cultivated microbes).

Further, according to an embodiment, the bioanalytical device comprises a gas flow generating device for generating said gas flow. Particularly, said gas flow generating device can be a fan, i.e. a powered machine for creating a gas flow such as a flow of air, or a compressor, or a source of a pressurized medium, particularly gas. The fan can comprise a rotating arrangement of vanes or blades. In contrast thereto, a compressor can also create a gas flow but increases the pressure of the gas by reducing its volume.

Furthermore, according to a preferred embodiment of the present invention, the humidity sensor is a relative humidity sensor configured to measure a relative humidity in said internal space with said output signal being indicative of said relative humidity, or wherein the humidity sensor is an absolute humidity sensor configured to measure an absolute humidity in said internal space with said output signal being indicative of said absolute humidity. According to an embodiment, the bioanalytical device further comprises a temperature sensor and is configured to derive a relative humidity from said measured absolute humidity and a temperature measured by the temperature sensor.

According to yet another preferred embodiment, the housing comprises an openable lid to allow access to said internal space, so that the carrier carrying the moist medium can be accommodated in said internal space in an open state of the lid and is enclosed by the housing in a closed state of the lid.

According to a preferred embodiment of the invention, said inlet is formed in the lid, wherein preferably the inlet is formed by a plurality of through-openings formed in the lid.

Furthermore, according to a preferred embodiment of the bioanalytical device, the bioanalytical device is configured to accommodate said carrier in the internal space such that a top surface of the moist medium faces said inlet.

According to a further aspect of the present invention, a method for detecting the presence of a carrier carrying a moist medium in an internal space of a bioanalytical device, the bioanalytical device being configured to accommodate the moist medium (e.g. carried by a carrier, see e.g. above) at a defined location in the internal space, wherein the method comprises the steps of:
- initiating a gas (e.g. air) flow flowing from said defined location towards a measurement site in said internal space,
- measuring a humidity at said measurement site,
- automatically detecting the presence of the moist medium (carried e.g. by the carrier) in the internal space if a change in the measured relative humidity forms a local maximum particularly upon initiation of said gas flow.

Preferably, a bioanalytical device according to the present invention is used for conducting the method according to the present invention. Particularly, the method can be further specified by the respective embodiment described herein in conjunction with the bioanalytical device according to the present invention.

In the following, embodiments of the present invention as well further features and advantages and other aspects of the present invention shall be described with reference to the Figures, wherein
- Fig. 1: shows an embodiment of a bioanalytical device according to the present invention,
- Fig. 2A: shows a schematic cross section of the device shown in Fig. 1,
- Fig. 2B: shows a schematic illustration of the flow channel according to an embodiment of the bioanalytical device; and
- Fig. 3: illustrates a measuring principle according to an embodiment of the present invention.

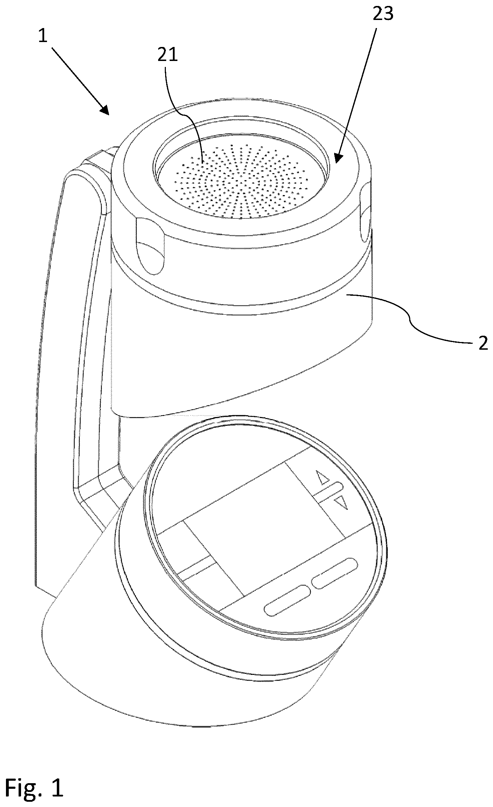

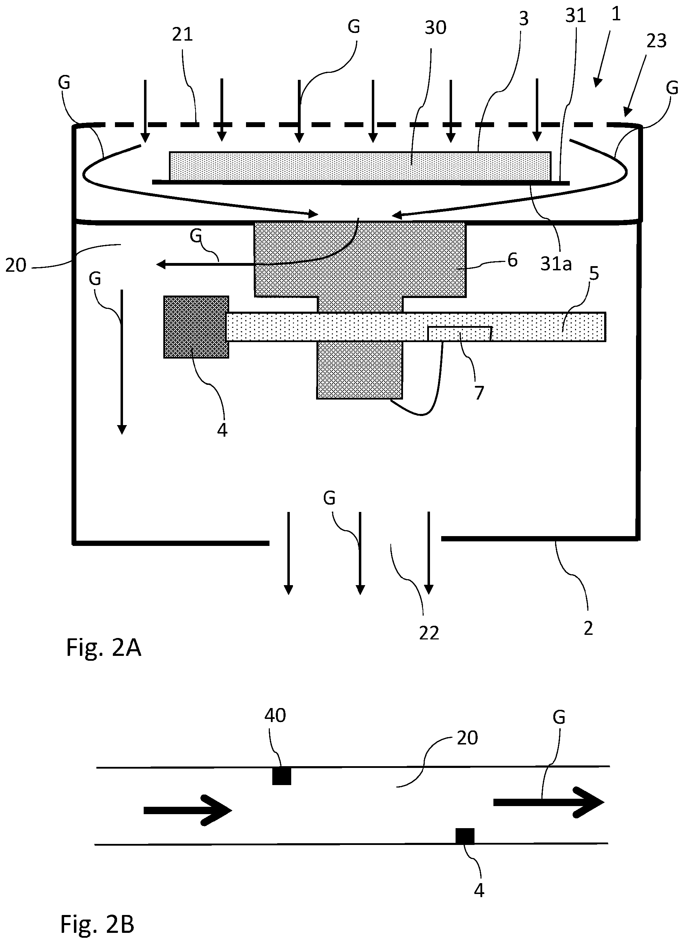

Referring to Figs. 1 and 2A showing an embodiment of a bioanalytical device 1 according to the present invention, the present invention advantageously utilizes the fact that a moist medium 30 carried e.g. by a suitable carrier 3, for instance any growth medium for organisms/cells/spores, contains a considerable amount of water, wherein some water will consistently evaporate from the medium 30 into a surrounding gas (note that the space around the nutrient plate/carrier 3 is oftentimes restricted).

Particularly, as indicated in Figs. 1 and 2A, the device 1 comprises a housing 2 defining an internal space 20 configured to accommodate said carrier 3 at a defined location, the carrier 3 carrying said moist medium 30. When a humidity sensor 4 can now be placed in fluidic connection with the gas G surrounding the moist medium 30, presence of the moist medium 30 can be detected through an increase in the humidity (e.g. relative humidity or absolute humidity) as measured by the sensor 4. Therefore, the device 1 comprises a humidity sensor 4 configured to measure a humidity in said internal space 20 and to provide an output signal indicative of said humidity, wherein the sensor 4 is preferably placed downstream of the moist medium 30 in a flow channel 20 formed by the internal space 20 so that a gas flow G flowing through the flow channel 20 transports humidity of the moist medium 30 towards the humidity sensor 4. Further, the device 1 preferably comprises an analyzing unit 5 (e.g. in form of an electronic circuit) operatively connected to the humidity sensor 4 so as to receive said output signal, wherein the analyzing unit 5 is configured to derive from said output signal a change of said humidity over time for detecting a presence of the carrier 3 carrying the moist medium 30 in the internal space 20 of the housing 2.

Here, humidity is continuously or repeatedly measured and presence of a moist (e.g. growth) medium 30 leads to an increase of the humidity detected by the humidity sensor 4 upon start of the gas flow G / measurement, while absence of a moist medium 30 leads to an unchanged humidity. Thus, if no medium 30 such as a nutrient plate is present, the humidity does not (significantly) change upon start of the gas flow G.

Thus, from the detection of a changed humidity (signal above an upper threshold) the presence of a moist medium 30 can be inferred and from the non-detection of a changed humidity (signal below a lower threshold) the absence of a moist medium 30 can be inferred.

Particularly, according to an embodiment of the present invention, the bioanalytical device 1 can be a microbial air sampler 1, wherein the gas flow G preferably first passes the moist growth medium 30 for impaction of particles upstream of the position of the humidity sensor 4.

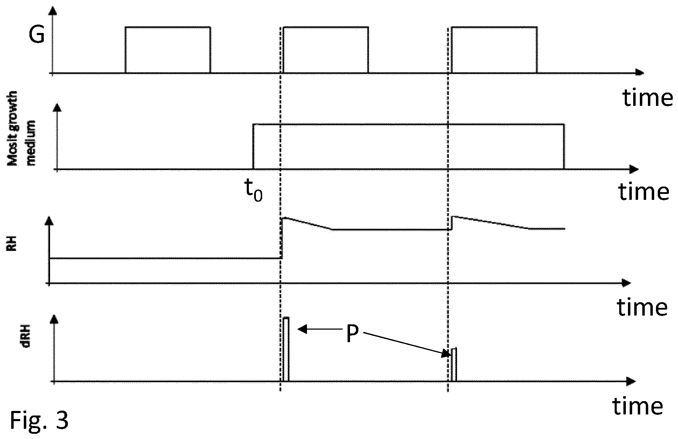

Particularly, Fig. 3 indicates a preferred measuring principle showing the gas flow G versus time in the topmost graph. If a moist medium 30 is arranged in the device 1 at time t₀, the humidity measured by the sensor 4 (here a relative humidity RH measured by a sensor 4 in the form of a relative humidity sensor 4) increases with the onset of the gas flow G. This can be detected as a peak P in a derivative of the relative humidity dRH with respect to time as shown in the bottom graph of Fig. 3.

Furthermore, the information about the presence/absence of the moist medium 30 can be used to control the process. For example:
- If a medium 30 is detected: continue gas (e.g. air) sampling.
- If a medium 30 is not detected, depending on instrument configuration either:
   - Automatically discontinue the sampling process and notify the user and/or a super-ordinary system.
   - Alert and optionally allow the user and/or a super-ordinary system to decide whether to continue or discontinue the sampling process.

Particularly, evaluating the change of relative humidity over time (dRH/dt or dRH) rather than the absolute humidity, enables the detection mechanism to be independent of ambient conditions. This allows detection of presence of a moist (e.g. growth) medium even in start stop cycles where the humidity in the system is already high from the last run where the carrier 3 carrying the moist medium 30 (e.g. nutrient plate) was in the device 1 (a similar principle is sometimes referred to as stop-flow technique to accumulate analyte in diagnostic biosensors).

Furthermore, Fig. 2B shows a schematic flow channel 20 according to an embodiment of the present invention. According thereto, the device 1 can comprise a thermal mass flow sensor 40 and the relative humidity sensor 4 downstream of the flow sensor 40 can further comprise sensors to measure the temperature and absolute pressure of the sampled gas (e.g. air). As all these sensors are available in miniaturized format, the device 1 and method according to the present invention can be implemented not only in large devices, but is also suited for portable applications.

As indicated in Fig. 2B the thermal mass flow sensor 40 can be used in a bypass configuration to measure the pressure drop along the flow channel. The pressure drop can artificially be enlarged using flow constrictions such as an orifice or venturi-configuration. For measuring the relative humidity (and particularly also the temperature T and absolute pressure p) the corresponding sensor 4 is preferably positioned in the flow channel 20 before, after, or in parallel to the mass flow sensor 40.

Furthermore, according to an embodiment indicated in Fig. 2A, particularly in case the device 1 is used as a portable microbial air sampler (as an example of a particle monitoring system) 1, the device 1 is preferably configured to generate the gas flow G (typically air) by drawing the gas G through an inlet 21 of a lid 23 of the housing 2 at a top of the device 1, wherein said inlet 21 can be formed by a perforation of the lid 23. The gas flow G then passes the carrier 3 and moist medium 30 carried by the carrier 3 (e.g. a nutrient plate such as an agar plate). The gas flow G can be generated by a gas flow generating device 6 such as a fan 6 that draws the gas flow G through said inlet 21 into the flow channel 20, wherein the gas flow generating device 6 can be arranged downstream the carrier 3 / medium 30 in said flow channel 20. Particularly, the humidity sensor 4 (or said sensing path shown in Fig. 2B) can be arranged downstream the gas flow generating device 6, where the sensor 4 measures the change in relative or absolute humidity to detect the presence of the moist medium 30 by means of the analyzing unit 5 that evaluates an output signal of the humidity sensor 4, e.g. as described above. The gas flow generating device 6 may be controlled by a controlling unit 7, that turns the gas flow generating device on or off or may control its rotor speed. Eventually, the gas flow G is discharged through an outlet 22 formed in the housing 2.

Preferably, the openable lid 23 allows easy access to said internal space 20, so that the carrier 3 carrying the moist medium 30 can be accommodated in said internal space 20 in an open state of the lid 23 at a defined position. The device 1 may comprise a support 31 on which the carrier can be placed, which support 31 may also secure the carrier 3 parallel to the lid 23 to prevent displacement of the carrier 3 inside the internal space 20. Once the lid 23 is closed, the housing 2 encloses the carrier 3 and moist medium 30 thereon. Particularly, the gas generating device 6 can be arranged below said support 31 facing a lower side 31a of the support 31, which lower side 31a faces away from the carrier 3 placed thereon. The gas flow G drawn in through inlet / perforation 21 is thus drawn along the medium 30 and then deflected around the carrier 3 and support 31 in the flow channel 20, sucked through the gas flow generating device 6 (e.g. fan) and passed along the humidity sensor 4 (and particularly along the flow sensor 40 if present, cf. Fig. 2B).

As described before, when no moist medium 30 (e.g. of a nutrient plate) is present in the internal space on support 31, the relative humidity sensor 4 measures no significant change in humidity prior to the start of the measurement versus directly after start and during the process as well as after the measurement/flow has stopped - the relative humidity is essentially constant over time. This behavior of the output signal of sensor 4 can be assessed by the analyzing device 5 which then detects that no moist medium 30 is present in the internal space 20 on support 31.

When a carrier 3 having a moist medium 30 thereon (e.g. nutrient plate) is inserted, the start-up of the gas flow G transports gas (e.g. air) that has come in close contact to the humidified nutrient plate 3 since the insertion of the plate 3 into the internal space 20 of the device 1. This volume of the gas flow G has a significantly higher relative humidity than the medium sensed before the gas flow G was started. During the time of a constant flow rate, a constant relative humidity (higher than in case without nutrient plate 3) will be seen. When stopping the device, the relative humidity level will stay high (cf. Fig. 3).

When restarting the gas flow G, the accumulated volume that was in close proximity to the nutrient plate 3 during the time the gas flow G was stopped will pass the relative humidity sensor 4. This will trigger the detection of a peak P in the relative humidity even though the relative humidity level was already high due to the previous measurement. This "stop-flow" induced peak can therefore be used to detect the presence of a carrier 3 with moist medium 30 (e.g. a nutrient plate such as an agar plate 3) in the device 1.

Due to the features according to the present invention, the present invention allows an easy integration of the measuring principle of the present invention into various devices and processes, reduces costs, achieves a high precision and thus increases process reliability.

Furthermore, the invention offers independence of ambient conditions (temperature, absolute pressure, relative humidity). Furthermore, a differential signal analysis renders the detection of the respective moist medium independent of previous configurations of the instrument and short-term history.

## Claims

1. A bioanalytical device (1), comprising:
- a housing (2) comprising an internal space (20) configured to accommodate a moist medium (30) at a location in the internal space (20),
- a humidity sensor (4) configured to measure a humidity in said internal space (20) and to provide an output signal indicative of said humidity, and
- an analyzing unit (5) operatively connected to the humidity sensor (4) so as to receive said output signal, wherein the analyzing unit (5) is configured to derive from said output signal a change of said humidity over time for detecting a presence of the moist medium (30) in the internal space (20) of the housing (2),
**characterized in that** the analyzing unit (5) is configured to detect the presence of the moist medium (30) in the internal space (20) when the determined change in relative humidity over time forms a local maximum (P).

2. The bioanalytical device according to claim 1, wherein the internal space (20) forms a flow channel, wherein the housing (2) is configured to accommodate a carrier (3) carrying the moist medium (30) in the internal space (20) so that the flow channel (20) extends along the moist medium (30).

3. The bioanalytical device according to claim 2, wherein the flow channel (20) extends from an inlet (21) of the housing (2) to an outlet (22) of the housing (2),

4. The bioanalytical device according to claim 2 or 3, wherein the bioanalytical device (1) is configured to provide a gas flow (G) through the flow channel (20) so that the gas flow passes the moist medium (30) carried by the carrier (3) when the carrier (3) is arranged in the internal space (20).

5. The bioanalytical device according to claim 4, wherein the humidity sensor (4) is arranged in the flow channel (20) downstream of said location.

6. The bioanalytical device according to claim 4 or 5, wherein the bioanalytical device (1) further comprises a control unit (7) configured to control the gas flow (G).

7. The bioanalytical device according to one of the preceding claims, wherein the analyzing unit (5) is configured to determine the change of humidity over time, particularly in an interval starting prior to a start-up of the gas flow (G) and ending past start-up of the gas flow (G).

8. The bioanalytical device according to one of the preceding claims, wherein the moist medium (30) is a moist growth medium for promoting microbial growth.

9. The bioanalytical device according to claim 4 and according to one of the claims 5 to 8 insofar referring to claim 4, wherein the bioanalytical device is configured to pass the gas flow (G) along the moist medium (30) when the carrier (3) is arranged in the internal space (20) such that particulate matter contained in said gas flow (G) settles on the moist medium (30).

10. The bioanalytical device according to claim 4 or according to one of the claims 5 to 9 insofar referring to claim 4, wherein the bioanalytical device (1) comprises a gas flow generating device (6) for generating said gas flow (G).

11. The bioanalytical device according to one of the preceding claims, wherein the humidity sensor (4) is a relative humidity sensor configured to measure a relative humidity in said internal space (20) with said output signal being indicative of said relative humidity, or wherein the humidity sensor (4) is an absolute humidity sensor configured to measure an absolute humidity in said internal space (20) with said output signal being indicative of said absolute humidity.

12. The bioanalytical device according to one of the preceding claims, wherein the housing (2) comprises an openable lid (23) to allow access to said internal space (20), so that the moist medium (30) can be accommodated in said internal space (20) in an open state of the lid (23) and is enclosed by the housing (2) in a closed state of the lid (23).

13. The bioanalytical device according to claims 3 and 12, wherein said inlet (21) is formed in the lid (23).

14. A method for detecting the presence of a moist medium (30) in an internal space (20) of a bioanalytical device (1), the bioanalytical device (1) being configured to accommodate the moist medium (30) at a location in the internal space (20), wherein the method comprises the steps of:
- allowing a gas flow (G) flowing from said location towards a measurement site in said internal space (20),
- measuring a humidity at said measurement site,
- detecting the presence of the moist medium (30) in the internal space (20) if a change in the measured humidity forms a local maximum (P).

## Patentansprüche

1. Eine bioanalytische Vorrichtung (1), die Folgendes umfasst:
- ein Gehäuse (2) mit einem Innenraum (20), der so gestaltet ist, dass er ein feuchtes Medium (30) an einer Stelle im Innenraum (20) aufnimmt,
- einen Feuchtigkeitssensor (4), der so konfiguriert ist, dass er eine Feuchtigkeit in dem Innenraum (20) misst und ein Ausgangssignal liefert, das die Feuchtigkeit anzeigt, und
- eine Analyseeinheit (5), die operativ mit dem Feuchtigkeitssensor (4) verbunden ist, um das Ausgangssignal zu empfangen, wobei die Analyseeinheit (5) konfiguriert ist, um aus dem Ausgangssignal eine Änderung der Feuchtigkeit über die Zeit abzuleiten, um ein Vorhandensein des feuchten Mediums (30) im Innenraum (20) des Gehäuses (2) zu erfassen,
**dadurch gekennzeichnet, dass** die Analyseeinheit (5) so konfiguriert ist, dass sie das Vorhandensein des feuchten Mediums (30) im Innenraum (20) erkennt, wenn die ermittelte Änderung der relativen Feuchtigkeit über die Zeit ein lokales Maximum (P) bildet.

2. Bioanalytische Vorrichtung nach Anspruch 1, wobei der Innenraum (20) einen Strömungskanal bildet, wobei das Gehäuse (2) so konfiguriert ist, dass es einen Träger (3) aufnimmt, der das feuchte Medium (30) in dem Innenraum (20) trägt, so dass sich der Strömungskanal (20) entlang des feuchten Mediums (30) erstreckt.

3. Bioanalytische Vorrichtung nach Anspruch 2, wobei sich der Strömungskanal (20) von einem Einlass (21) des Gehäuses (2) zu einem Auslass (22) des Gehäuses (2) erstreckt,

4. Bioanalytische Vorrichtung nach Anspruch 2 oder 3, wobei die bioanalytische Vorrichtung (1) so konfiguriert ist, dass sie einen Gasfluss (G) durch den Strömungskanal (20) bereitstellt, so dass der Gasfluss das von dem Träger (3) getragene feuchte Medium (30) passiert, wenn der Träger (3) in dem Innenraum (20) angeordnet ist.

5. Bioanalytische Vorrichtung nach Anspruch 4, wobei der Feuchtigkeitssensor (4) im Strömungskanal (20) stromabwärts der genannten Stelle angeordnet ist.

6. Bioanalytische Vorrichtung nach Anspruch 4 oder 5, wobei die bioanalytische Vorrichtung (1) ferner eine Kontrolleinheit (7) umfasst, die zum Kontrollieren des Gasflusses (G) konfiguriert ist.

7. Bioanalytische Vorrichtung nach einem der vorhergehenden Ansprüche, **dadurch gekennzeichnet, dass** die Analyseeinheit (5) so ausgebildet ist, dass sie die zeitliche Veränderung der Feuchtigkeit bestimmt, insbesondere in einem Intervall, das vor dem Einschalten des Gasflusses (G) beginnt und nach dem Einschalten des Gasflusses (G) endet.

8. Bioanalytische Vorrichtung nach einem der vorhergehenden Ansprüche, wobei das feuchte Medium (30) ein feuchtes Wachstumsmedium zur Förderung des mikrobiellen Wachstums ist.

9. Bioanalytische Vorrichtung nach Anspruch 4 und nach einem der Ansprüche 5 bis 8 sofern rückbezogen auf Anspruch 4, wobei die bioanalytische Vorrichtung so konfiguriert ist, dass sie den Gasfluss (G) entlang des feuchten Mediums (30) leitet, wenn der Träger (3) im Innenraum (20) angeordnet ist, so dass sich die in dem Gasfluss (G) enthaltenen Partikel auf dem feuchten Medium (30) absetzen.

10. Bioanalytische Vorrichtung nach Anspruch 4 oder nach einem der Ansprüche 5 bis 9 sofern rückbezogen auf Anspruch 4, wobei die bioanalytische Vorrichtung (1) eine Gasflusserzeugungsvorrichtung (6) zur Erzeugung des Gasflusses (G) umfasst.

11. Bioanalytische Vorrichtung nach einem der vorhergehenden Ansprüche, wobei der Feuchtigkeitssensor (4) ein Sensor für relative Feuchtigkeit ist, der so konfiguriert ist, dass er eine relative Feuchtigkeit in dem Innenraum (20) misst, wobei das Ausgangssignal die relative Feuchtigkeit anzeigt, oder wobei der Feuchtigkeitssensor (4) ein Sensor für absolute Feuchtigkeit ist, der so konfiguriert ist, dass er eine absolute Feuchtigkeit in dem Innenraum (20) misst, wobei das Ausgangssignal die absolute Feuchtigkeit anzeigt.

12. Bioanalytische Vorrichtung nach einem der vorhergehenden Ansprüche, wobei das Gehäuse (2) einen zu öffnenden Deckel (23) aufweist, um den Zugang zu dem Innenraum (20) zu ermöglichen, so dass das feuchte Medium (30) in einem offenen Zustand des Deckels (23) in dem Innenraum (20) untergebracht werden kann und in einem geschlossenen Zustand des Deckels (23) von dem Gehäuse (2) umschlossen ist.

13. Bioanalytische Vorrichtung nach einem der Ansprüche 3 und 12, wobei der Einlass (21) im Deckel (23) ausgebildet ist.

14. Verfahren zum Nachweis des Vorhandenseins eines feuchten Mediums (30) in einem Innenraum (20) einer bioanalytischen Vorrichtung (1), wobei die bioanalytische Vorrichtung (1) so konfiguriert ist, dass sie das feuchte Medium (30) an einer Stelle in dem Innenraum (20) aufnimmt, wobei das Verfahren die folgenden Schritte umfasst:
- Ermöglichung eines Gasflusses (G), der von der genannten Stelle zu einer Messstelle in dem genannten Innenraum (20) fließt,
- Messung der Luftfeuchtigkeit an der genannten Messstelle,
- Erkennen des Vorhandenseins des feuchten Mediums (30) im Innenraum (20), wenn eine Änderung der gemessenen Feuchtigkeit ein lokales Maximum (P) bildet.

## Revendications

1. Dispositif bioanalytique (1), comprenant :
- un boîtier (2) comprenant un espace interne (20) configuré pour accueillir un milieu humide (30) à un endroit de l'espace interne (20),
- un capteur d'humidité (4) configuré pour mesurer une humidité dans ledit espace interne (20) et pour fournir un signal de sortie indiquant ladite humidité, et
- une unité d'analyse (5) connectée de manière opérationnelle au capteur d'humidité (4) afin de recevoir ledit signal de sortie, l'unité d'analyse (5) étant configurée pour déduire dudit signal de sortie un changement de ladite humidité dans le temps afin de détecter la présence du milieu humide (30) dans l'espace interne (20) du boîtier (2),
**caractérisé par le fait que** l'unité d'analyse (5) est configurée pour détecter la présence du milieu humide (30) dans l'espace interne (20) lorsque la variation déterminée de l'humidité relative dans le temps forme un maximum local (P).

2. Le dispositif bioanalytique selon la revendication 1, dans lequel l'espace interne (20) forme un canal d'écoulement, dans lequel le boîtier (2) est configuré pour accueillir un support (3) transportant le milieu humide (30) dans l'espace interne (20) de sorte que le canal d'écoulement (20) s'étende le long du milieu humide (30).

3. Le dispositif bioanalytique selon la revendication 2, dans lequel le canal d'écoulement (20) s'étend d'une entrée (21) du boîtier (2) à une sortie (22) du boîtier (2),

4. Le dispositif bioanalytique selon la revendication 2 ou 3, dans lequel le dispositif bioanalytique (1) est configuré pour fournir un flux de gaz (G) à travers le canal d'écoulement (20) de sorte que le flux de gaz passe le milieu humide (30) transporté par le support (3) lorsque le support (3) est disposé dans l'espace interne (20).

5. Le dispositif bioanalytique selon la revendication 4, dans lequel le capteur d'humidité (4) est disposé dans le canal d'écoulement (20) en aval dudit emplacement.

6. Le dispositif bioanalytique selon la revendication 4 ou 5, dans lequel le dispositif bioanalytique (1) comprend en outre une unité de contrôle (7) configurée pour contrôler le flux de gaz (G).

7. Le dispositif bioanalytique selon l'une des revendications précédentes, dans lequel l'unité d'analyse (5) est configurée pour déterminer le changement d'humidité dans le temps, en particulier dans un intervalle commençant avant le démarrage du flux de gaz (G) et se terminant après le démarrage du flux de gaz (G).

8. Le dispositif bioanalytique selon l'une des revendications précédentes, dans lequel le milieu humide (30) est un milieu de croissance humide pour favoriser la croissance microbienne.

9. Dispositif bioanalytique selon la revendication 4 et selon l'une des revendications 5 à 8 dans la mesure où se référant à la revendication 4, le dispositif bioanalytique est configuré pour faire passer le flux de gaz (G) le long du milieu humide (30) lorsque le support (3) est disposé dans l'espace interne (20) de telle sorte que les particules contenues dans ledit flux de gaz (G) se déposent sur le milieu humide (30).

10. Le dispositif bioanalytique selon la revendication 4 ou selon l'une des revendications 5 à 9 dans la mesure où elle se réfère à la revendication 4, dans lequel le dispositif bioanalytique (1) comprend un dispositif de génération de flux de gaz (6) pour générer ledit flux de gaz (G).

11. Le dispositif bioanalytique selon l'une des revendications précédentes, dans lequel le capteur d'humidité (4) est un capteur d'humidité relative configuré pour mesurer une humidité relative dans ledit espace interne (20), ledit signal de sortie étant indicatif de ladite humidité relative, ou dans lequel le capteur d'humidité (4) est un capteur d'humidité absolue configuré pour mesurer une humidité absolue dans ledit espace interne (20), ledit signal de sortie étant indicatif de ladite humidité absolue.

12. Le dispositif bioanalytique selon l'une des revendications précédentes, dans lequel le boîtier (2) comprend un couvercle ouvrable (23) pour permettre l'accès à cet espace interne (20), de sorte que le milieu humide (30) peut être logé dans cet espace interne (20) dans un état ouvert du couvercle (23) et est enfermé par le boîtier (2) dans un état fermé du couvercle (23).

13. Le dispositif bioanalytique selon les revendications 3 et 12, dans lequel ladite entrée (21) est formée dans le couvercle (23).

14. Méthode de détection de la présence d'un milieu humide (30) dans un espace interne (20) d'un dispositif bioanalytique (1), le dispositif bioanalytique (1) étant configuré pour accueillir le milieu humide (30) à un endroit de l'espace interne (20), dans laquelle la méthode comprend les étapes suivantes :
- permettre à un flux de gaz (G) de s'écouler depuis ledit emplacement vers un site de mesure dans ledit espace interne (20),
- mesurer de l'humidité sur le site de mesure,
- détecter la présence du milieu humide (30) dans l'espace interne (20) si une variation de l'humidité mesurée forme un maximum local (P).
